# EUROPÄISCHE PATENTSCHRIFT

(11) **EP 2 998 162 B1**
(45) Veröffentlichungstag und Bekanntmachung des Hinweises auf die Patenterteilung: **06.06.2018**
(21) Anmeldenummer: 15179818.8
(22) Anmeldetag: 05.08.2015
(51) Int. Cl.: B60R 7/04, B60R 11/00, B60N 2/14, B62B 5/00

(54) **NUTZFAHRZEUGKABINE MIT MOBILER INNENEINRICHTUNG**
COMMERCIAL VEHICLE CAB WITH MOBILE INTERIOR DESIGN
CABINE DE VEHICULE UTILITAIRE AYANT UN DISPOSITIF INTERIEUR MOBILE

(30) Priorität: 19.09.2014 DE 102014113604
(43) Veröffentlichungstag der Anmeldung: 23.03.2016
(73) Patentinhaber: GRAMMER AG, 92224 Amberg (DE)
(72) Erfinder: Meyder, Volkhart, 64658 Fürth / Odenwald (DE); Übelacker, Roland, 92536 Pfreimd (DE); Wittmann, Hubert, 92685 Floß (DE); Strohal, Christian, 31118 Braunschweig (DE)
(74) Vertreter: Hannke, Christian

(56) Entgegenhaltungen:
- WO-A2-03/063647
- US-A1- 2005 264 020

## Beschreibung

Die Erfindung betrifft eine Fahrerkabine eines Nutzfahrzeugs.

Fahrer von Nutzfahrzeugen wie eines Lastkraftwagens (LKW) müssen häufig aufgrund von vorgeschriebenen Ruhezeiten oder aufgrund eines LKW-Wechsels eine Fahrerkabine eines LKWs mit ihrer Ausrüstung neu ausstatten. Hierfür müssen häufig verschiedene Dokumente und PC-Tablets, Nahrungsmittel und Getränke, gegebenenfalls eine Kaffeemaschine und integrierte Cup-Holders sowie eine Cooling-Box mit gegebenenfalls einem Kühlschrank von dem Fahrer individuell neu in der Fahrerkabine eines LKWs eingerichtet werden. Zudem sind persönliche Ausrüstungen, wie Waschutensilien und Kleider, in der Kabine zu stationieren. Da mittlerweile die Anzahl der anzuordnenden und in die LKW-Kabine zu stationierenden individuellen Gegenstände des Fahrers sehr groß ist, besteht die Notwendigkeit, dies auf einfache und schnelle Weise stattfinden zu lassen. Ansonsten müsste der Fahrer mehrmals zwischen dem stationären Ort, an dem diese Gegenstände aufbewahrt sind, und der LKW-Kabine hin und her laufen. Zudem besteht Bedarf, diese Gegenstände aufgrund der baulich bedingten Höhe der LKW-Kabine auf einfache Weise in das Innere der Kabine trotz ihres Gewichtes bringen zu können.

Außerdem ist die Anordnung dieser Gegenstände in ordentlicher und aufgeräumter Form innerhalb der Kabine gewünscht. Dies ist häufig dadurch nicht realisierbar, dass aufgrund der Anordnung des Fahrersitzes und des Beifahrersitzes wenig Restplatz innerhalb der Kabine vorhanden ist, insbesondere wenn im hinteren Bereich der Kabine noch ein Schlafplatz vorhanden sein soll. Die Beladung der Fahrerkabine findet bisher häufig von der Beifahrersitzseite aus statt, da die Fahrersitzseite zusätzlich mit einem Lenkrad ausgestattet ist, welches hier hindernd wirkt. Jedoch ist auch der Beifahrersitz für das Anordnen der Gegenstände häufig behindernd, da man über diesen Beifahrersitz hinweg die Gegenstände heben muss, um in den Zwischenraum zwischen Fahrersitz und Beifahrersitz mit den Gegenständen zu gelangen.

Die Druckschrift US 2005/ 264 020 A1 zeigt beispielsweise Hubsysteme, welche einer gehbehinderten Person das Umsteigen von einem herkömmlichen Fahrzeugsitz auf einen Rollstuhl erleichtern sollen. Dafür kann ein Sitzstützteil über zur Bodenfläche beabstandete Schwenkarme um eine an der Bodenfläche der Fahrerkabine befestigten Achse gedreht werden.

Demzufolge ist es Aufgabe der Erfindung, ein Gesamtsystem zu schaffen, welches innerhalb der Fahrerkabine eine stabile, geordnete und aufgeräumte Anordnung der verschiedenen Gegenstände des Fahrers und gegebenenfalls des Beifahrers auf einfache Weise während der Zuladung und während des Betriebs ermöglicht.

Dies wird erfindungsgemäß dadurch gelöst, dass innerhalb der Fahrerkabine des Nutzfahrzeugs mindestens ein Drehelement mit einer an einer Bodenfläche der Fahrerkabine vertikal befestigten Drehachse zum Durchführen einer Drehbewegung verbunden ist. Erfindungsgemäß ist das mindestens eine Drehelement mindestens ein Schwenkarm, welcher mit einem ersten Endabschnitt an der Drehachse befestigt und um die Drehachse um 360° verschwenkbar ist, wobei der mindestens eine Schwenkarm parallel zur Bodenfläche verlaufend angeordnet sowie direkt kontaktierend zur Bodenfläche ausgebildet ist.

Durch diese Verbindung einer mit der Fahrerkabine verbundenen Drehachse mit einem Drehelement kann letzteres innerhalb der Fahrerkabine auf geführte Weise um die Drehachse verschwenkt bzw. verdreht werden. Dabei ist die Drehachse beispielsweise eine Welle und kann insbesondere auch als Drehzapfen oder Drehzapfenelement bezeichnet werden. Beispielsweise kann die Welle gegenüber der Bodenfläche mit mindestens zwei oberhalb und/ oder unterhalb der Bodenfläche in mindestens einem Tragelement angeordneten Wälzlagern drehbar gelagert sein, wobei das Tragelement mechanisch starr mit der Bodenfläche verbunden ist.

Bevorzugt ist die Drehachse hinsichtlich ihrer Winkelposition gegenüber der Bodenfläche arretierbar. Beispielsweise ist die Drehachse hierzu mit außenumfänglich gleichmäßig angeordneten Aussparungen versehen, welche beispielsweise im Abstand von 10° angeordnet sind. In diese kann ein komplementär dazu ausgebildeter Zapfen eingreifen, welcher fest an der Bodenfläche, aber verschwenkbar in Radialrichtung der Drehachse angeordnet ist. Durch ein Verschwenken des Zapfens in radialer Richtung der Drehachse und Eingreifen des Zapfens in jeweils eine Aussparung kann die Drehachse arretiert bzw. wieder freigegeben werden. Alternativ kann eine Anordnung aus Magneten, welche umfänglich in regelmäßigen Abständen an der Drehachse angeordnet sind, und Gegenmagneten, welche an der Bodenfläche umfänglich um die Drehachse angeordnet sind, verschiedene Rastpositionen definieren.

Die Ausrichtung der Bodenfläche ist dabei bevorzugt horizontal, wenn das Nutzfahrzeug auf ebenem Untergrund steht.

Ferner ist es denkbar, dass das mindestens eine Drehelement der mindestens eine Schwenkarm, ein kastenförmiger Aufbewahrungsbehälter oder eine Drehsäule ist und/ oder um die Drehachse um 360° verschwenkbar ist.

Im kastenförmigen Aufbewahrungsbehälter können beispielsweise Fahrtunterlagen oder auch persönliche Sachen des Fahrers aufbewahrt werden. An der Drehsäule kann unter anderem eine Anzeigeeinrichtung wie ein elektronisches Display angeordnet sein, auf welchem der Fahrer beispielsweise über eine geeignete Software die Routenplanung abruft. An dem Schwenkarm können insbesondere, wie nachfolgend noch näher erläutert, weitere Komponenten befestigt sein, die dann mit dem Schwenkarm verschwenkt werden können.

Eine Drehung der Drehelemente um 360° um die Drehachse erlaubt es dabei dem Fahrer bzw. dem Beifahrer, von jedem Ort der Fahrerkabine optimalen Zugriff auf die Drehelemente zu haben.

Erfindungsgemäß ist vorgesehen, dass der Schwenkarm mit einem ersten Endabschnitt an der Drehachse befestigt und parallel zur Bodenfläche der Fahrerkabine verlaufend angeordnet ist. So dreht er sich in einer Ebene parallel zur Bodenfläche um die Drehachse.

Dabei ist der Schwenkarm erfindungsgemäß nicht nur parallel, sondern zusätzlich direkt kontaktierend zur Bodenfläche ausgebildet. Beispielsweise kann eine untere Fläche des Schwenkarms gegenüber der Bodenfläche kugel- oder gleitgelagert sein. Ebenfalls kann hierbei der erste Endabschnitt des Schwenkarms mittels einer mechanisch starren Verbindung an der Drehachse befestigt sein. Ist eine unabhängige Bewegung zwischen Schwenkarm und Drehachse gewünscht, kann statt einer starren Verbindung beispielsweise ein Gleitlager, zum Beispiel ein Rundtischgleitlager, angeordnet sein.

Gemäß einem nicht zur vorliegenden Erfindung gehörenden Beispiel kann der Schwenkarm alternativ mit einem ersten Endabschnitt im Bereich einer oberen Hälfte der Drehachse befestigt sein, wobei zwischen einer Längserstreckungsrichtung des Schwenkarms und einer Längserstreckungsrichtung der Drehachse ein Winkel ausgebildet ist, welcher zwischen einem Wert von 45° und einem Wert von 135° einstellbar ist. Diese Alternative bietet die Möglichkeit, den Schwenkarm als Lift zu verwenden, indem beispielsweise ein Element, welches am Schwenkarm angeordnet ist, mittels diesem von der unteren Position von 45° bis zur oberen Position von 135° anhebbar und auf gleichem Wege wieder absenkbar ist. Dies kann mittels einer Antriebseinrichtung durchgeführt werden, wobei die Antriebseinrichtung dabei zum Beispiel ein Elektromotor oder ein Pneumatikzylinder sein kann.

Beispielsweise kann an einem zweiten Endabschnitt des mindestens einen Schwenkarms der Aufbewahrungsbehälter, ein Beifahrersitz und/ oder mindestens eine Drehsäule mechanisch fest verbunden angeordnet sein. Diese Komponenten können also wie oben beschrieben entweder direkt an der Drehachse oder indirekt über den Schwenkarm an dieser befestigt sein. Dafür können die Komponenten bzw. Drehelemente beispielsweise eine Aussparung an ihrer Bodenfläche aufweisen, die zur Form der Drehachse komplementär ausgebildet ist, beispielsweise zu einer kreisförmigen Drehachse eine zylindrische Aussparung. Vorteilhaft kann der ansonsten kreisförmige Querschnitt der Drehachse zusätzlich an zumindest einer Stelle mit einer Abflachung versehen sein. So kann beispielsweise eine Positionssicherung des Aufbewahrungsbehälters gegenüber der Drehachse in umfänglicher Richtung der Drehachse erzielt werden, wenn die Aussparung des Aufbewahrungsbehälters ebenfalls mit einer komplementär gestalteten Abflachung ausgebildet ist.

Allgemein ist es vorteilhaft, wenn die Verbindung zwischen Drehelementen und Drehachse lösbar und/ oder arretierbar ist.

Bevorzugt sind dabei der erste und der zweite Endabschnitt des Schwenkarms in Längserstreckungsrichtung gesehen an sich gegenüberliegenden Enden des Schwenkarms angeordnet.

Bei schweren Lasten wie zum Beispiel dem Aufbewahrungsbehälter ist die oben beschriebene aktive Veränderung des Winkels mittels der Antriebseinrichtung zur Vermeidung von Belastungen des Fahrers vorteilhaft.

Generell ist es dabei vorteilhaft, wenn der Schwenkarm und die Drehachse mittels einer Gelenkverbindung verbunden sind. Diese kann dabei als Kugel-, Scharnier-, Dreh- oder Sattelgelenk ausgebildet sein.

Handelt es sich um kleinere Lasten, die angehoben werden sollen, reicht eventuell eine passive Unterstützungseinrichtung zum ansonsten manuellen Anheben der Lasten durch den Fahrer aus. Insofern kann auch ein Drehmomentscharnier (auch Friktionsscharnier genannt) die Gelenkverbindung zwischen Schwenkarm und Drehachse ausbilden. Dieses rein mechanische Bauelement dient dazu, eine voreingestellte Winkelposition selbsttätig zu halten. So kann beispielsweise das Display auf der mit dem Schwenkarm verbundenen Funktionsdrehsäule mittels der Drehmomentscharnierverbindung in eine Position gebracht und gehalten werden, von der aus es für den Fahrer und/oder den Beifahrer einsehbar ist.

Weiterhin ist es neben einer Höhenverstellung des Schwenkarms vorteilhaft, wenn der mindestens eine Schwenkarm entlang seiner Längserstreckungsrichtung von einem Grundzustand bis zu einem vollständig ausgezogenen Zustand teleskopartig ausfahrbar ist.

Da der Schwenkarm kontaktierend zur Bodenfläche ausgebildet ist, kann er auf seiner gesamten Länge diese Bodenfläche als Auflagefläche nutzen und somit die mechanische Belastung in Form eines Drehmoments an der Verbindungsstelle mit der Drehachse reduzieren, wodurch auch im vollständig ausgezogenen Zustand eine sichere Verschwenkung um die Drehachse gewährleistet ist. So werden lineare Verschiebungen des zweiten Endabschnitts des Schwenkarms und ggf. der weiteren daran befestigten Elemente realisiert.

Gemäß einem weiteren bevorzugten Ausführungsbeispiel ist es dabei vorteilhaft, wenn der mindestens eine Schwenkarm bezüglich seiner Drehbewegung mindestens eine erste und eine zweite Rastposition aufweist, in welcher er jeweils verdrehsicher zur Bodenfläche fixierbar ist. Dies ist vor allem während der Fahrt oder auch beim Beladen des Nutzfahrzeugs vorteilhaft, da hierdurch ein ungewolltes Verdrehen des Schwenkarms und der daran befestigten Komponenten verhindert werden kann.

Dabei ist es vorstellbar, dass der Schwenkarm in der ersten Rastposition mit seiner Längserstreckungsrichtung parallel zu einer Breitenrichtung der Fahrerkabine anordenbar ist. So kann er beispielsweise während des Betriebs außerhalb des Bereichs angeordnet werden, in dem der Fahrer- und der Beifahrersitz positioniert sind. Auch an ihm befestigte Elemente können somit beispielsweise im hinteren Bereich der Fahrerkabine aufgeräumt angeordnet werden.

Weiterhin ist es denkbar, dass der Schwenkarm in der zweiten Rastposition unter Ausbildung eines spitzen Winkels zur Breitenrichtung der Fahrerkabine anordenbar ist, wobei der zweite Endabschnitt des Schwenkarms bevorzugt über die Bodenfläche der Fahrerkabine hinausragend angeordnet ist und/ oder der Schwenkarm im vollständig ausgezogenen Zustand vorliegt.

Dies ist besonders beim Beladen der Fahrerkabine vor Fahrtantritt vorteilhaft, wie später anhand der Figuren noch näher erläutert wird. Schwenkarm und Drehachse sind dabei beispielsweise so angeordnet, dass der Schwenkarm Richtung Beifahrertür zeigt bzw. zumindest der zweite Endabschnitt des Schwenkarms sogar durch die geöffnete Beifahrertür hinausragt. In diesem Fall kann der Fahrer, der außerhalb der Fahrerkabine steht, an den zweiten Endabschnitt des Schwenkarms Drehelemente befestigen und diese unterstützt durch eine anhand der Figuren im Anhang beschriebenen Liftvorrichtung in die Fahrerkabine heben.

Ferner ist es sinnvoll, wenn benachbart und/ oder angrenzend zur Drehachse in der Bodenfläche der Fahrerkabine mindestens eine Aussparung angeordnet ist. Zur Realisierung dieser Aussparung kann also die Drehachse hohlzylindrisch ausgebildet sein. Beispielsweise kann die Aussparung die eigentliche Montagebohrung für die Drehachse darstellen. Ist die Drehachse nicht sich durch die Bodenfläche hindurch erstreckend angeordnet, sondern zum Beispiel mittels eines an der Bodenfläche befestigten Flansches gegenüber der Bodenfläche gelagert, ist es vorteilhaft, wenn die Aussparung benachbart zur Drehachse angeordnet ist.

Zur Versorgung der Elemente, die innerhalb der Fahrerkabine an der Drehachse angeordnet sind, und zur Versorgung weiterer an diesen Elementen angeordneten Komponenten wie Kaffeemaschinen oder weitere Stromverbraucher, welche nachfolgend noch näher erläutert werden, ist es insbesondere vorteilhaft, wenn Leitungen wie Stromleitungen, Wasserleitungen, Hydraulik- und/ oder Pneumatikleitungen vorgesehen sind, wobei davon erste Abschnitte innerhalb der Fahrerkabine, zweite Abschnitte durch die Aussparung in der Bodenfläche und dritte und/oder vierte Abschnitte unterhalb der Bodenfläche der Fahrerkabine verlaufend angeordnet sind.

Der Platz, den die Drehachse einnimmt, kann also vorteilhaft ebenfalls für die Anordnung von Leitungen genutzt werden. Ferner kann das oben erwähnte Antriebselement zur Anhebung des Schwenkarms mittels der Leitungen versorgt werden. Beispielsweise ist das Antriebselement ein Elektromotor und mit Stromleitungen verbunden. Alternativ kann es ein pneumatischer Schwenkantrieb sein, zu welchem Stromleitungen und Pneumatikleitungen führen.

Weiterhin ist es vorteilhaft, wenn die ersten Abschnitte der Leitungen an dem oder innerhalb des mindestens einen Drehelements, insbesondere parallel zur Längserstreckungsrichtung des mindestens einen Schwenkarms anordenbar sind. Die Leitungen verlaufen also bevorzugt nicht lose herumliegend, sondern sind entweder an den Außenflächen der Drehelemente fixiert oder auch im Inneren der Drehelemente integriert verlaufend angeordnet. Bei beiden Varianten wird die Stolpergefahr für die Insassen und damit die Gefahr einer Beschädigung der Leitungen reduziert. Dabei ist bei der integrierten Variante die Sicherheit nochmals erhöht. Denkbar wäre hier, dass die ersten Abschnitte der Leitungen bei Montage der Fahrerkabine nachträglich in die Elemente eingebaut werden oder aber auch bereits integriert vorliegen und per Steckverbindung mit den zweiten Abschnitten der Leitungen verbunden werden. Durch letztere Modulbauweise lässt sich der Montageaufwand enorm reduzieren. Es versteht sich, dass bei der integrierten Bauweise an den Drehelementen die notwendigen Aussparungen vorgesehen sein müssen.

Ein weiteres bevorzugtes Ausführungsbeispiel sieht zusätzlich vor, dass zwischen einem ersten Ende der dritten Abschnitte und einem ersten Ende der vierten Abschnitte jeweils mindestens eine Pumpe für Fluide wie Wasser, Luft oder Hydraulikflüssigkeit anordenbar ist. Diese Pumpe ist also bevorzugt aus Platzgründen unterhalb der Bodenfläche angeordnet, wodurch eine Lärmbelastung für die Insassen bei Betrieb der Pumpe ebenfalls reduziert ist.

Vorteilhaft lässt sich die Pumpe mittels einer Steuereinheit manuell und/ oder automatisch steuern.

Zur Versorgung der Komponenten ist es dabei natürlich vorteilhaft, wenn an einem zweiten Ende der vierten Abschnitte jeweils mindestens ein Vorratsbehälter wie ein Fluidspeicher für Wasser, Luft oder Hydraulikflüssigkeit anordenbar ist.

In der Praxis hat es sich unter anderem bewährt, wenn die Drehachse zwischen einem Fahrersitz und dem Beifahrersitz der Fahrerkabine angeordnet ist. Diese Anordnung hat den Vorteil, dass beide Insassen von ihrem Sitz aus auf die Drehachse bzw. auf die damit verbundenen Elemente und Komponenten zugreifen können. Diese Position gewährleistet außerdem eine vorteilhafte Anordnung des Schwenkarms hinsichtlich seiner ersten und zweiten Rastposition.

Beispielsweise kann der erste Schwenkarm mittels eines länglichen Hebels ausgebildet sein. Weiterhin kann er aus Kunststoff, einem faserverstärktem Kunststoff oder einem Metall wie zum Beispiel Aluminium oder Stahl oder einer Metalllegierung bestehen.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: einen Fahrer beim Beladen des Nutzfahrzeugs;
- Fig. 2: einen beim Beladen nutzbaren Gepäcktransportwagen;
- Fig. 3: die Bestückung des Gepäcktransportwagens mit zwei Aufbewahrungsbehältern;
- Fig. 4: die Verbindung des Gepäcktransportwagens mit den Aufbewahrungsbehältern;
- Fig.5: eine Darstellung des Gepäcktransportwagens mit den verbundenen Aufbewahrungsbehältern in vertikal aufgestelltem Zustand;
- Fig. 6: den Gepäcktransportwagen gemäß Fig. 5 mit einem weiteren Aufbewahrungsbehälter;
- Fig.7: die Verbindung des Gepäcktransportwagens mit den verbundenen Aufbewahrungsbehältern mit dem weiteren Aufbewahrungsbehälter;
- Fig. 8: eine Darstellung des Gepäcktransportwagens mit den drei verbundenen Aufbewahrungsbehältern;
- Fig. 9: den Transport des Gepäcktransportwagens mit den drei verbundenen Aufbewahrungsbehältern durch den Fahrer;
- Fig. 10: das Innere einer Fahrerkabine;
- Fig. 11: den ersten Schwenkarm mit stangenartigen Elementen im verschwenkten Zustand;
- Fig. 12: die Verschwenkung des zweiten stangenartigen Elements zum Schwenkarm und die Anordnung außerhalb der Fahrerkabine;
- Fig. 13: das Ausfahren des zweiten stangenartigen Elements und das Befestigen des weiteren Aufbewahrungsbehälters am zweiten stangenartigen Element;
- Fig. 14: das Anheben des weiteren Aufbewahrungsbehälters mittels einer Einfahrbewegung des zweiten stangenartigen Elements;
- Fig. 15: das zweite stangenartige Element im maximal eingefahrenen Zustand;
- Fig. 16: den ersten Schwenkarm und den am zweiten stangenartigen Element befestigten Aufbewahrungsbehälter in einem verschwenkten Zustand;
- Fig. 17-19: verschiedene Schritte der Beladung der Fahrerkabine mit den ersten beiden Aufbewahrungsbehältern;
- Fig. 20: die beladene Fahrerkabine mit geschlossener Beifahrertür;
- Fig. 21: das Innere der Fahrerkabine aus der Vogelperspektive;
- Fig. 22-25: verschiedene Positionen des Aufbewahrungsbehälters innerhalb der Fahrerkabine;
- Fig. 26-29: verschiedene Schritte der Anpassung des Kabineninneren bei einer Pause des Fahrers;
- Fig. 30, 31: Belegung der Kabine mit Fahrer und Beifahrer;
- Fig. 32-35: verschiedene Schritte der Anpassung des Kabineninneren durch den Beifahrer;
- Fig. 36-39: verschiedene Schritte der Anpassung des Beifahrersitzes;
- Fig. 40-42: verschiedene Schritte der Anpassung des Kabineninneren vor Weiterfahrt;
- Fig. 43a, 43b: Komponenten der Fahrerkabine in der Übersicht;
- Fig. 44: eine bevorzugte Ausführungsform der Erfindung.

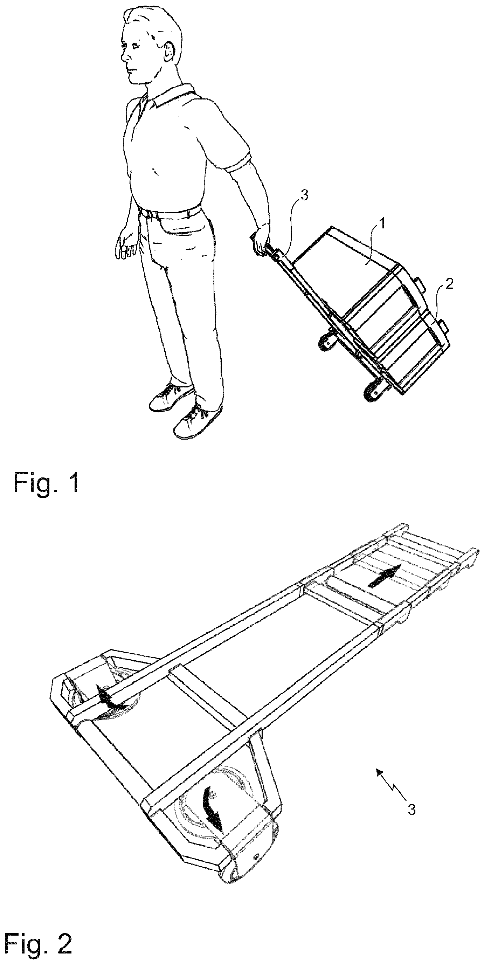

Es sei darauf hingewiesen, dass die Figuren 1-9, 43a und 44 Ausführungsbeispiele zeigen, welche nicht zur vorliegenden Erfindung gehören, sondern lediglich zum besseren Verständnis des vorliegenden Erfindungsgegenstandes dienen.

Gemäß Fig. 1 ist vorgesehen, dass der Fahrer eine erste Boxeinheit 1 mit Arbeits- und Nahrungsmitteln und eine zweite Boxeinheit 2 mit persönlichen Utensilien, wie Kleider und Waschutensilien, auf einen gemeinsamen Gepäcktransportwagen 3 von beispielsweise einem Speditionsgebäude zu dem LKW transportiert. Der Gepäcktransportwagen 3 ist rollbar und ähnlich einem Trolley von Hand über eine Parkplatzfläche durch den LKW-Fahrer zu ziehen.

Der Gepäcktransportwagen 3 hat gemäß Fig. 2 einklappbare Räder, um ihn raumsparend in der LKW-Kabine oder außenseitig verstauen zu können. Zudem hat er einen ausziehbaren bzw. längenverstellbaren Griff.

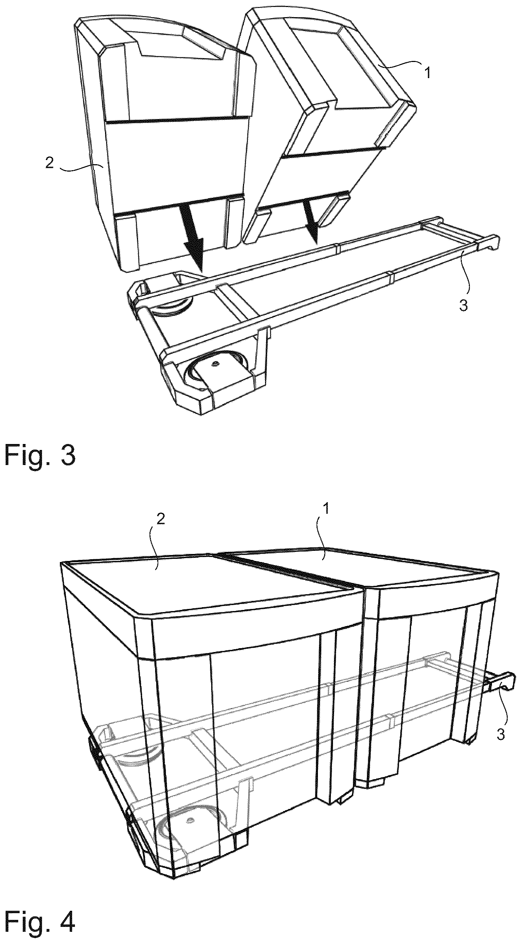

Der Gepäcktransportwagen 3 wird gemäß Fig. 3 mit den beiden Aufbewahrungsbehältern 1 und 2 bestückt und mit diesen mittels üblicher Verbindungen, z. B. mittels Klappverbindungen, verbunden. Eine derartige Verbindung ist in Fig. 4 dargestellt.

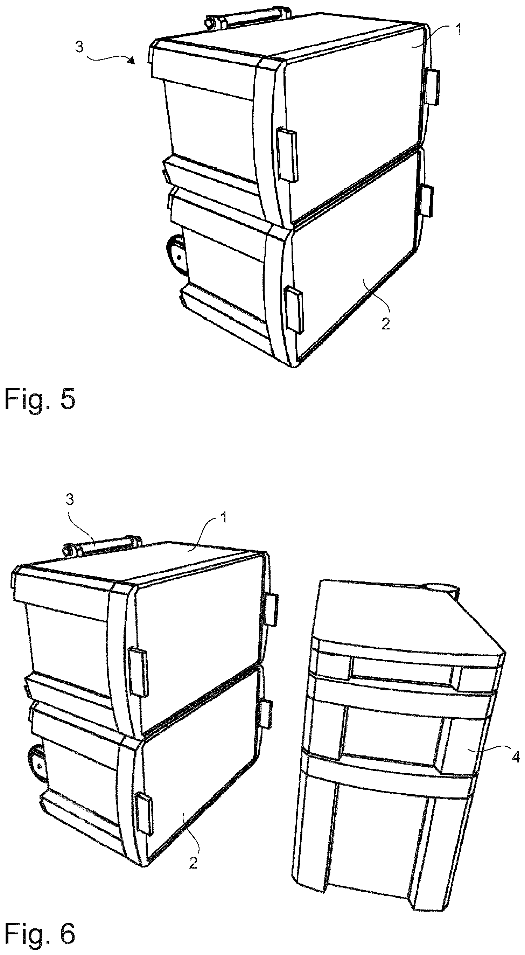

Anschließend wird der Gepäcktransportwagen 3 mit den Aufbewahrungsbehältern 1, 2 gemäß Fig. 5 aufgestellt, also in eine senkrechte Position gebracht.

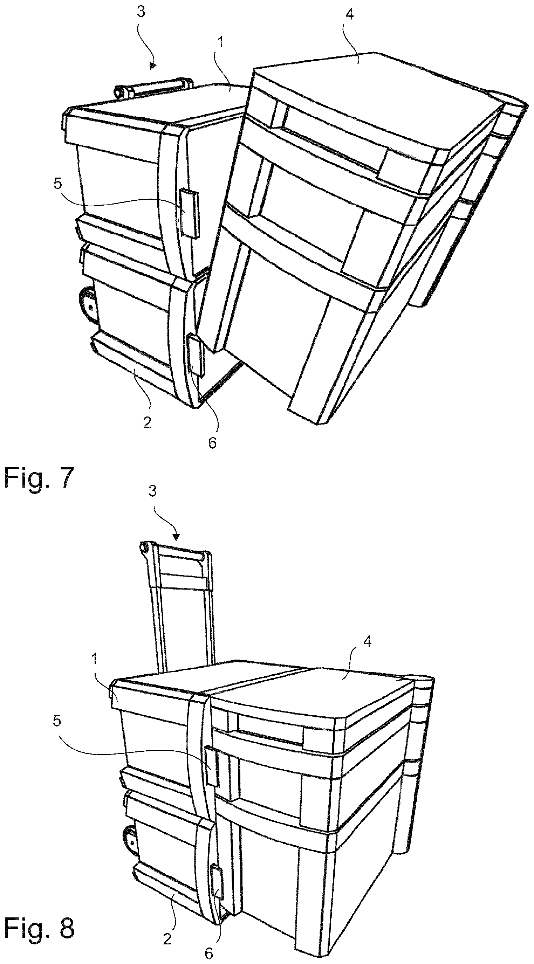

Die Aufbewahrungsbehälter 1, 2 können beispielsweise für persönliches Hab und Gut, wie Utensilien und Kleider verwendet werden. Ein weiterer Aufbewahrungsbehälter 4 gemäß Fig. 6 dient dann dazu, Arbeitsmaterialien wie Dokumente, Tablet-PCs, Kaffeemaschinen und gegebenenfalls weitere Nahrungsmittel mit in die Fahrerkabine 21 einzubringen und dort hin zu transportieren. Dieser weitere Aufbewahrungsbehälter 4 wird gemäß Fig. 7 durch beispielsweise Klappverbindungen 5, 6, die schwenkbar ausgebildet sind und aus Kunststoff bestehen, an den Aufbewahrungsbehältern 1 und 2 befestigt.

In Fig. 8 ist die feste Verbindung des Gepäcktransportwagens 3 zu den drei Aufbewahrungsbehältern 1, 2 und 4 dargestellt.

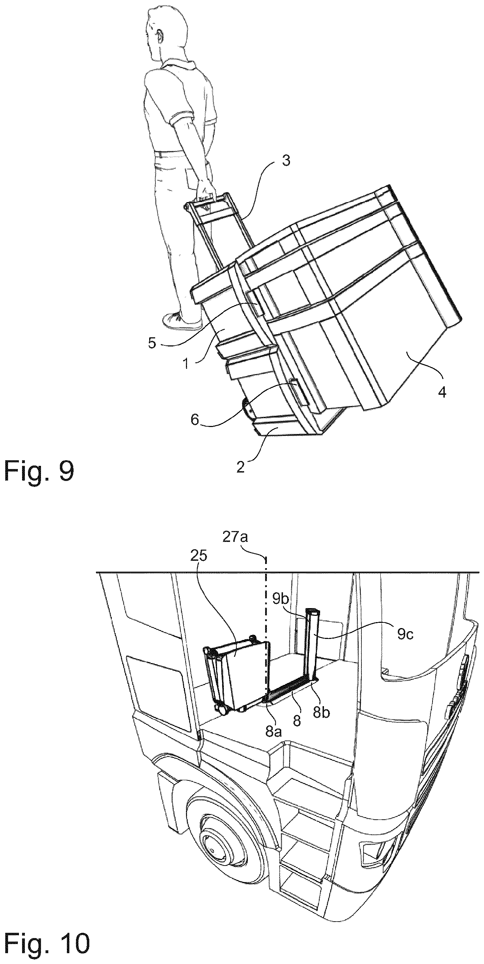

In Fig. 9 ist der Transport dieser drei Behälter 1, 2, 4 mittels des Transportwagens oder Gepäcktransportwagens 3 durch den Fahrer 40 wiedergegeben.

In Fig. 9 wird nun zusammen mit den fortfolgenden Figuren die erfindungsgemäße Beladung der Fahrerkabine 21 mit diesen drei Aufbewahrungsbehältern 1, 2 und 4 wiedergegeben. Zur einfacheren Darstellung ist die LKW-Kabine 21 hier nicht mit der Beifahrertür dargestellt. Es ist davon auszugehen, dass sich die Beifahrertür in einem offenen Zustand befindet.

In Fig. 10 ist deutlich zu entnehmen, dass ein zentraler Schwenkpunkt 7 bzw. eine vertikal angeordnete Drehachse 27a innerhalb der Kabine 21 an einer Bodenfläche 30 der Kabine 21 befestigt ist. An der Drehachse 27a ist vorliegend ein bodenseitig verlaufender Schwenkarm 8 mit seinem ersten Endabschnitt 8a zum Durchführen einer Drehbewegung schwenkbar angeordnet, der wiederum an seinem anderen Endabschnitt 8b im Wesentlichen vertikal verlaufende stangenartige Elemente 9 aufweist.

Hierbei ist die Drehachse 27a zwischen einem nicht gezeigten Fahrersitz 24 und einem Beifahrersitz 25 der Fahrerkabine 21 angeordnet.

Weiterhin ist zu sehen, dass an einem zweiten Endabschnitt 8b des ersten Schwenkarms 8 stangenartige Elemente 9b, 9c zueinander parallel und senkrecht zum ersten Schwenkarm 8 angeordnet sind. Diese stangenartigen Elemente 9b, 9c dienen hier dem Hochheben des Aufbewahrungsbehälters 4, sind aber nicht Teil der vorliegenden Erfindung, weshalb nicht weiter auf diese eingegangen wird.

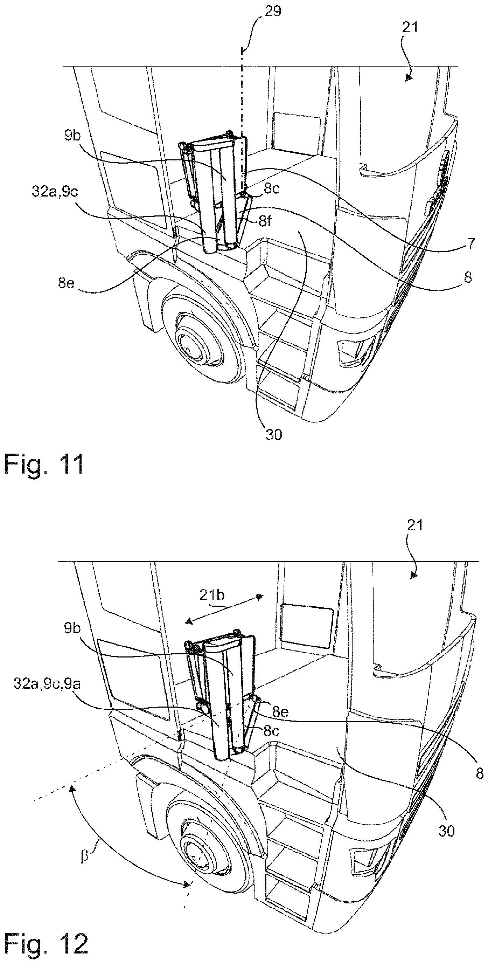

Gemäß Fig. 11 bzw. Fig. 12 kann der erste Schwenkarm 8 um den Schwenkpunkt 7 bzw. um die Drehachse 27a geschwenkt werden, so dass der zweite Endabschnitt 8b des Schwenkarms 8 in Richtung zur Beifahrertür weist, was dessen zweite Rastposition 8e darstellt, in der er vorliegend verdrehsicher zur Bodenfläche 30 fixierbar ist und hinsichtlich seiner Längserstreckungsrichtung 8c unter Ausbildung eines spitzen Winkels β zur Breitenrichtung 21b der Fahrerkabine 21 angeordnet ist.

Gemäß Fig. 11 ist der Schwenkarm 8 in seinem Grundzustand 8f. Gestrichelt gezeichnet ist der Zustand, in dem er entlang seiner Längserstreckungsrichtung 8c zu einem vollständig ausgezogenen Zustand 8g teleskopartig ausgefahren vorliegt, wodurch er sich durch die geöffnete Beifahrertür hindurch erstreckend und sein zweiter Endabschnitt 8b außerhalb der Fahrerkabine 21 angeordnet werden kann. Dies hat den Vorteil, dass statt der gezeigten Anordnung aus stangenartigen Elementen 9b, 9c eine vereinfachte Hebevorrichtung zum Anheben von Drehelementen wie zum Beispiel dem Aufbewahrungsbehälter 4 vorgesehen werden könnte.

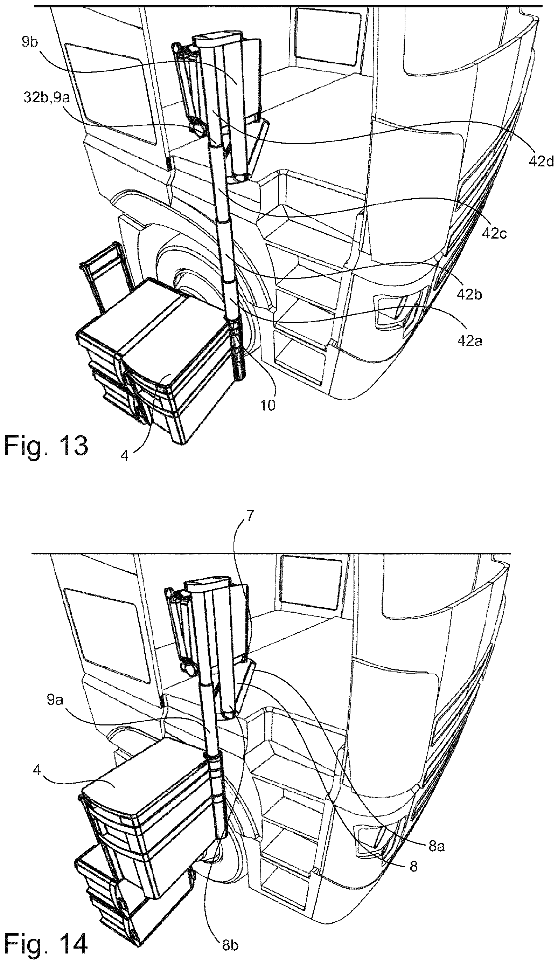

Anschließend findet - wie es in Fig. 12 und Fig. 13 dargestellt ist - ein Ausfahren einer der Säulen 9c bzw. 9a statt, indem diese sich nach unten erstreckt bis zu einem hier maximal ausgefahrenen Zustand 32b und in eine dafür komplementär ausgebildete vorgesehene Eingreifeinrichtung 10 des Aufbewahrungsbehälters 4 eingreift.

Für diese Zwecke ist das zweite stangenartige Element 9c als Teleskoparm 9a ausgebildet, welcher aus insgesamt vier axial zueinander verschieblich gelagerten hohlzylindrischen Abschnitten 42a, 42b, 42c, 42d mit unterschiedlichen Außendurchmessern und Innendurchmessern besteht.

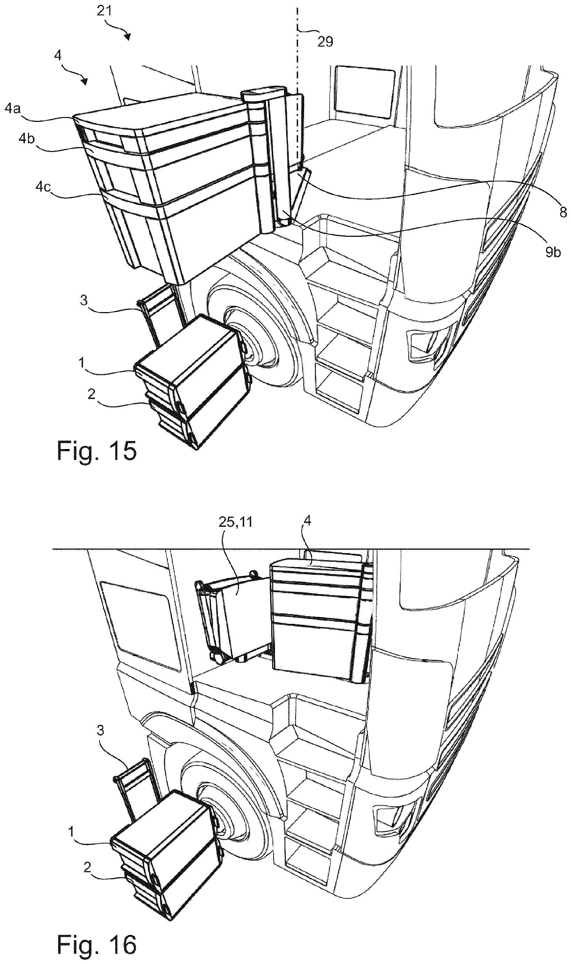

Gemäß Fig. 14, 15 und 16 findet anschließend ein Anheben des Aufbewahrungsbehälters 4 mittels einer Einfahrbewegung des Teleskoparms 9a statt und ein Hineinverschwenken des Aufbewahrungsbehälters 4 um den Schwenkpunkt 7 bzw. die Drehachse 27a in die Fahrerkabine 21, wie es in Fig. 16 dargestellt ist. Anschließend kann der Aufbewahrungsbehälter 4 innerhalb der Fahrerkabine 21 an einem gewünschten Platz, der vorbestimmbar ist, abgestellt werden. Dies setzt voraus, dass der Beifahrersitz 25, wie er gemäß Bezugszeichen 11 im eingeklappten Zustand vorhanden ist, nicht momentan innerhalb des Transportweges für den Aufbewahrungsbehälter 4 angeordnet ist.

Somit findet erfindungsgemäß eine Schwenkung des aufgegriffenen Aufbewahrungsbehälters 4 um den Schwenkpunkt 7 bzw. die Drehachse 27a innerhalb der Fahrzeugkabine 21 statt. Ebenso erfindungsgemäß ist der Beifahrersitz 25 in diesem Zustand eingeklappt und liegt somit als Klappsitz 11 vor. Somit ist der eingeklappte Beifahrersitz 11, der ebenso erfindungsgemäß ausgebildet ist, nicht im Wege stehend bezüglich des Transportweges des Aufbewahrungsbehälters 4.

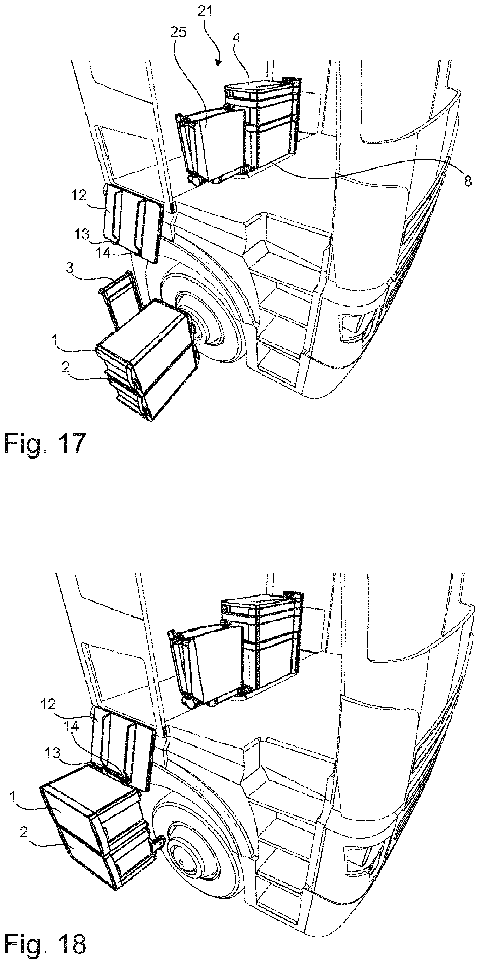

In Fig. 17, 18 und 19 wird der anschließende Transport der Aufbewahrungsbehälter 1 und 2 und somit die Beladung der Fahrerkabine 21 mit den Aufbewahrungsbehältern 1 und 2 dargestellt. Es ist zu sehen, dass diese Aufbewahrungsbehälter 1, 2 über die ohnehin in den bisherigen Fahrerkabinen 21 enthaltene seitliche Ladungsluke 12 mittels Einhängen in dafür vorgesehene Hakenelemente 13 und 14 an der Klappe dieser Öffnung 12 nach oben geschwenkt werden können und in den Fahrerkabinenraum gebracht werden können.

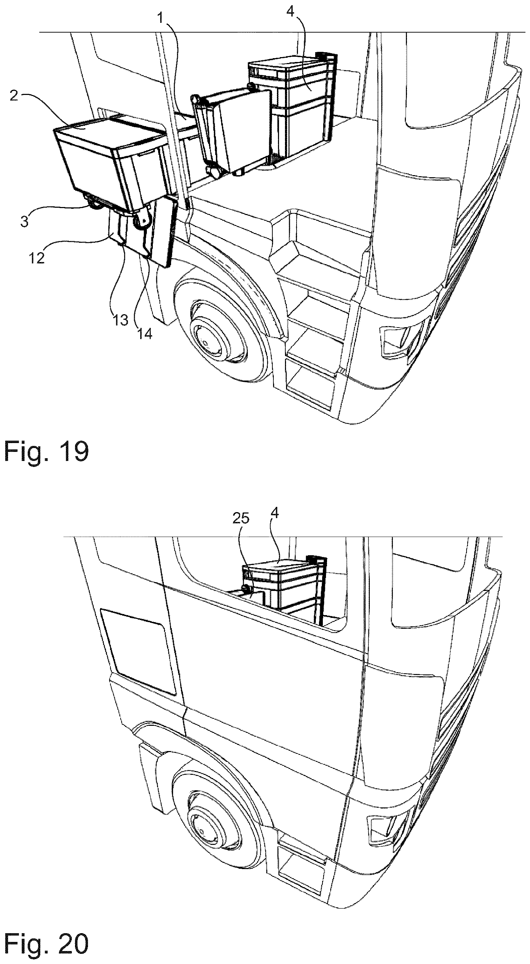

Gemäß Fig. 20 ist die Fahrerkabine mit geschlossener Beifahrertür und den eingebrachten Aufbewahrungsbehältern dargestellt.

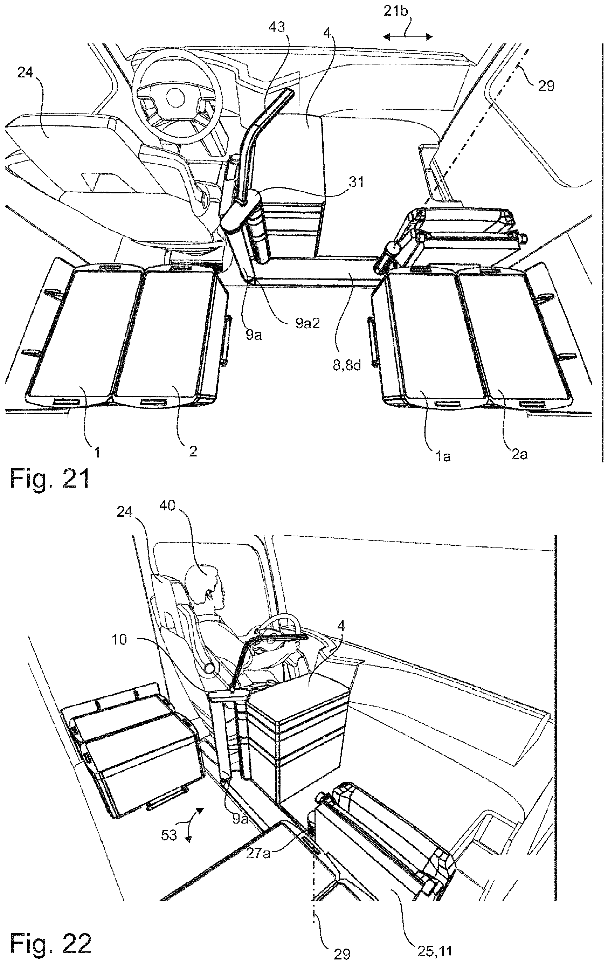

Fig. 21 zeigt nochmals den Fahrerkabineninnenraum nach Beladung mit den Aufbewahrungsbehältern 1, 2, 4. Dieser Darstellung ist deutlich zu entnehmen, dass der weitere Aufbewahrungsbehälter 4 zwischen dem Beifahrersitz 25 und dem Fahrersitz 24 angeordnet ist. Dabei kann ein mit dem oberen Endabschnitt 9a1 temporär verbindbares und manuell bedienbares Schwenkstangenelement 43 für die Erleichterung der Verschwenkung des Aufbewahrungsbehälters 4 sorgen. Die Aufbewahrungsbehälter 1, 2 für persönliches Hab und Gut können ebenso insgesamt vier Aufbewahrungsbehälter 1, 2, 1a und 2a darstellen und innerhalb der Fahrerkabine 21 im rückwärtigen Bereich angeordnet sein. Dies ist in Fig. 21 dargestellt. Hier ist zu sehen, dass sich der Schwenkarm 8 in seiner ersten Rastposition 8d befindet, in welcher er mit seiner Längserstreckungsrichtung 8c parallel zur Breitenrichtung 21b der Fahrerkabine 21 angeordnet ist. Das Bezugszeichen 53 steht für die erläuterte Schwenkbewegung, die der Schwenkarm 8 im nicht-arretierten Zustand um die Drehachse 27a durchführen kann.

Ferner ist zu sehen, dass der Aufbewahrungsbehälter 4 nach wie vor an dem Teleskoparm 9a mechanisch fest verbunden angeordnet ist.

Denkbar wäre auch, dass im Gegensatz zur gezeigten Anordnung, gemäß der das Verbindungselement 31 nach wie vor zwischen dem Teleskoparm 9a und dem anderen stangenartigen Element 9b angeordnet ist, das andere stangenartige Element 9b und das Verbindungselement 31 nach Beladung der Fahrerkabine 21 entfernt werden sowie der Teleskoparm 9a mit dem zweiten Ende 8b des ersten Schwenkarms 8 verbunden wird. Dabei ist es denkbar, dass die für die Versorgung der Komponenten wichtigen Leitungen mittels Schnellkupplung oder Verbindungselementen am unteren Endabschnitt 9a2 des Teleskoparms 9a mit den vorhandenen Anschlüssen am zweiten Ende 8b des ersten Schwenkarms 8 verbunden werden.

Denkbar wäre auch, dass der Aufbewahrungsbehälter 4 nun am ersten stangenartigen Element 9b befestigt wäre, wodurch der Teleskoparm 9a und das Verbindungselement 31 entfernt werden können.

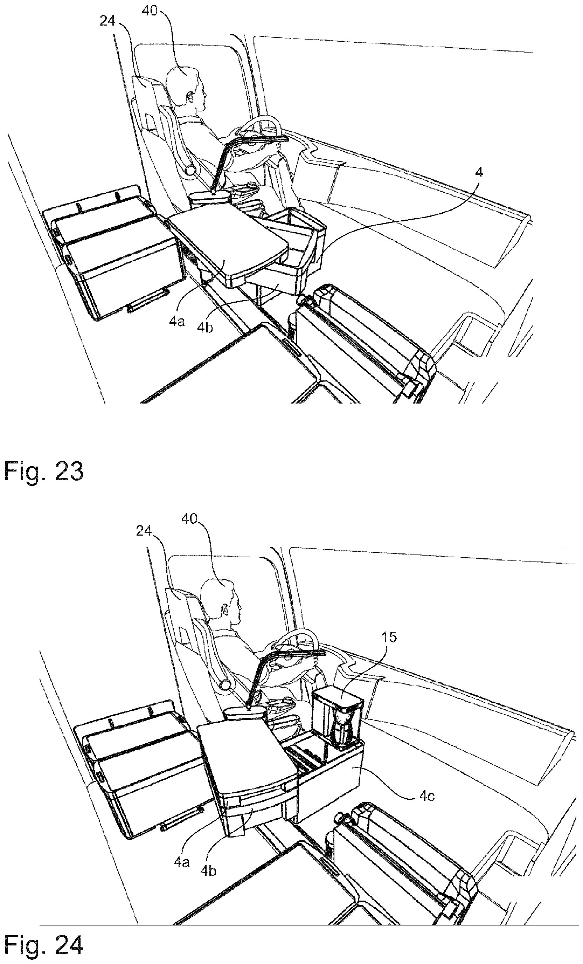

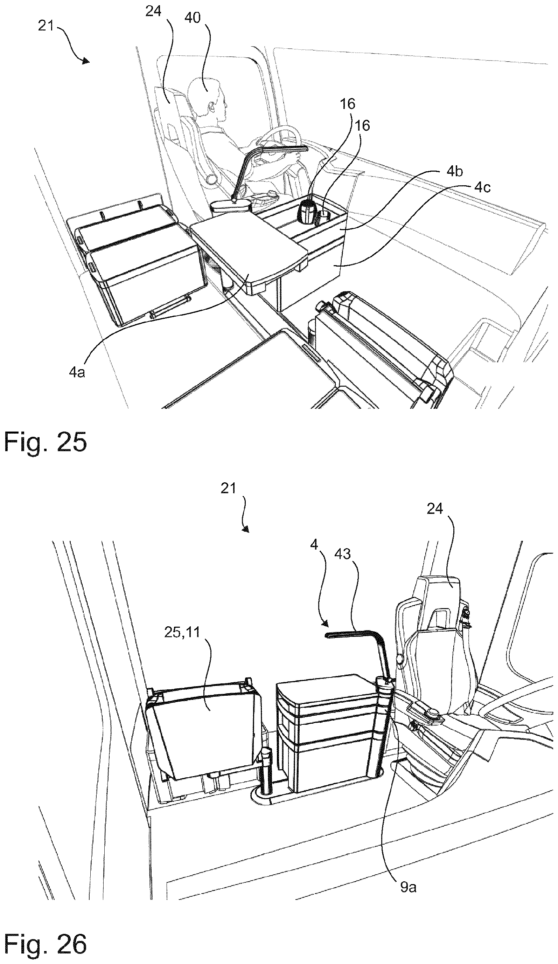

In Fig. 22, 23, 24 und 25 ist der Aufbewahrungsbehälter 4, der mittig zwischen Fahrersitz 24 und Beifahrersitz 25 angeordnet ist, in verschiedenen Positionen dargestellt. Vorteilhaft weist der Aufbewahrungsbehälter 4 einen derartigen Schwenkmechanismus innerhalb des Behälters 4 auf, dass er - wenn er oberseitig mittels der Befestigung 10 an dem Teleskoparm 9a angeordnet ist - in verschiedenen Niveaus unterschiedlich weit um den Teleskoparm 9a aufgeschwenkt werden kann. Dies ist beispielsweise in Fig. 23, 24 und 25 dargestellt. Der obere Abschnitt 4a kann dabei beispielsweise als Arbeitsfläche beispielsweise zum Essen und Arbeiten dienen. Dazu könnte optional der obere Abschnitt 4a beispielsweise mit einem Tablet versehen sein. Ein darunterliegender Abschnitt 4b beinhaltet bestimmte aufzubewahrende Dokumente. Ein darunterliegender Abschnitt 4c gemäß Fig. 24 beinhaltet weitere Aufbewahrungsteile, wie beispielsweise eine Kaffeemaschine 15, wie in Fig. 24 gezeigt. Ebenso kann ein Cup-Holder mit einer Kaffeekanne 16 in dem Aufbewahrungsbehälter 4 angeordnet sein. Dies ist in Fig. 25 dargestellt. Der Aufbewahrungsbehälter kann auch optional eine aktive Kühlbox für Kaltgetränke enthalten.

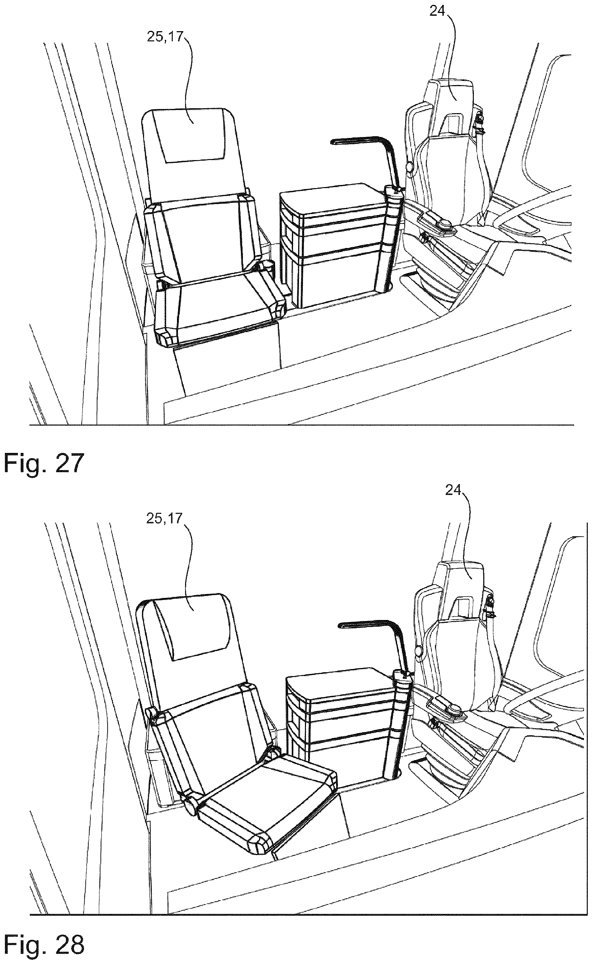

Wenn der Fahrer 40 eine Pause machen möchte, begibt er sich - wie aus den Figuren 26, 27, 28 und 29 ersichtlich - auf den ebenso schwenkbaren Beifahrersitz 25 in eine Kaffeepausenposition, indem er zu dem oberen Abschnitt 4a des Aufbewahrungsbehälters 4, der sich in ausgeschwenkter Stellung befindet, hinschwenkt. D.h. dass der Beifahrersitz 25 um den bereits bekannten Schwenkpunkt 7 bzw. um die Längsachse 29 und der dazugehörigen Schwenkeinrichtung derart geschwenkt wird, dass er zu dem Tisch 4a hingewandt ist.

Denkbar ist auch, dass ein an der Funktionsdrehsäule 36 angeordneter zweiter Schwenkarm 28 mit einem ersten Endabschnitt 28a um die Drehachse 27a ebenfalls schwenkbar gelagert ist, wobei eine Längserstreckungsrichtung 28c des zweiten Schwenkarms 28 senkrecht zur Drehachse 27a angeordnet ist, und dass der Beifahrersitz 25 mit dem zweiten Schwenkarm 28 mechanisch fest verbunden anordenbar ist.

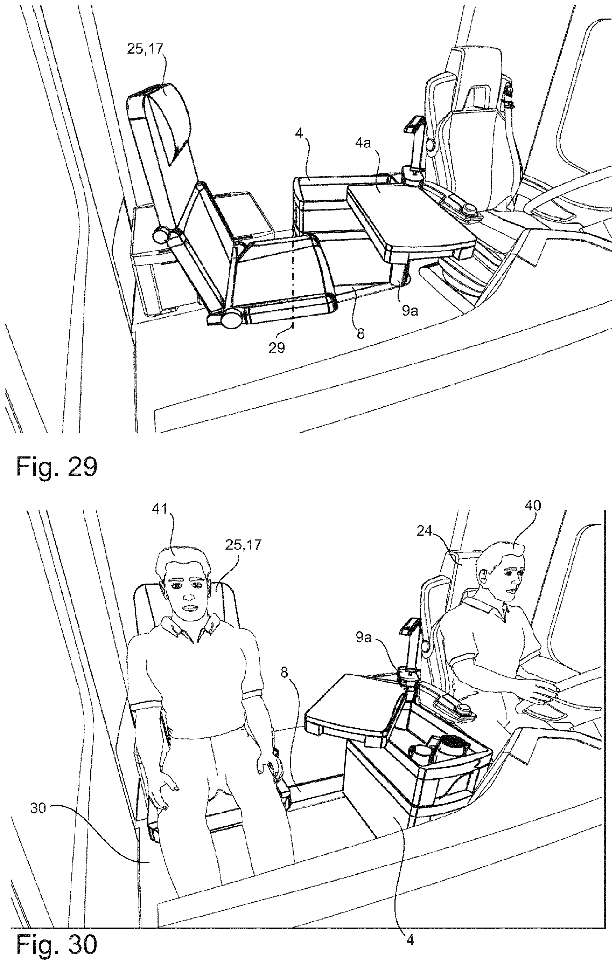

Zugleich kann der Tisch 4a um den Teleskoparm 9a herumgeschwenkt werden und dadurch von dem restlichen Aufbewahrungsbehälter 4 weggeschwenkt werden. Dies ist beispielsweise in Fig. 29 wiedergegeben. Die erfindungsgemäße Schwenkeinrichtung im Schwenkpunkt 7 beinhaltet somit nicht nur eine ortsfeste, stationäre Anordnung einer Schwenkachse, sondern auch verschiedene Schwenkarme, wie beispielsweise den Schwenkarm 8, an dem wiederum weitere Bauteile, wie der Aufbewahrungsbehälter 4, angeordnet sein können.

Der teleskopartige Arm 9a kann vorteilhaft Strom- oder Wasserleitungen, Hydraulik- und Pneumatikleitungen beinhalten, um entsprechend beispielsweise Wasseranschluss, Stromanschluss innerhalb des Aufbewahrungsbehälters 4 beispielsweise für die Kaffeemaschine 15 zu haben. Ebenso dient die Pneumatik/Elektrik/Hydraulik für das Auf- und Abwärtsfahren des Teleskoparms 9a.

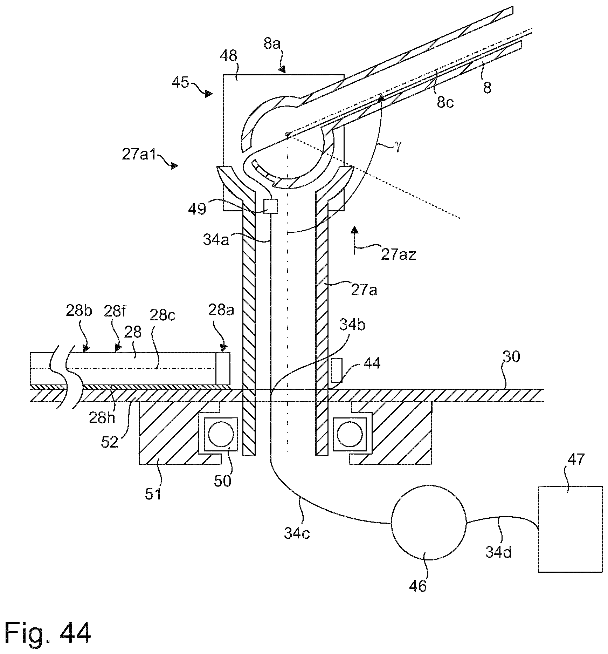

Somit müssen diese Arten von Leitungen über den Schwenkarm 8 in den Drehpunkt 7 hinein führen und dort unterseitig unterhalb des Fahrzeugkabinenbodens 30 oder in diesen integriert zu jeweiligen Vorratsbehältern führen. Selbstverständlich sind hierfür Pumpen und ähnliche Einrichtungen entsprechend angeordnet. Dies wird gemäß Fig. 44 beschrieben.

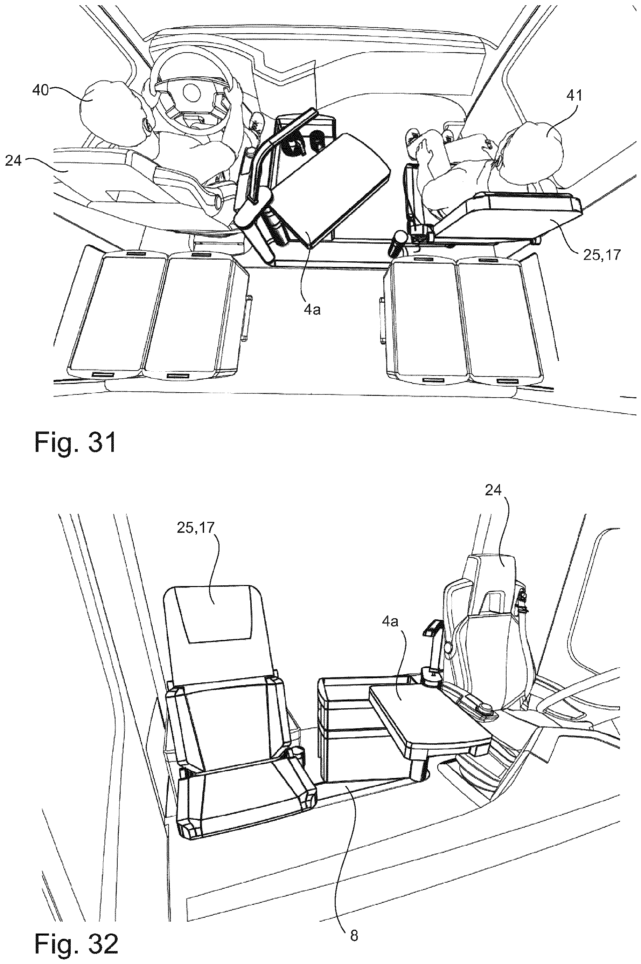

In Fig. 30 und 31 ist nochmals die Belegung beider Sitze 24, 25, also auch des Beifahrersitzes 25, mit verschwenktem Oberteil des Aufbewahrungsbehälters 4, welches als Tisch ausgebildet sein kann, dargestellt.

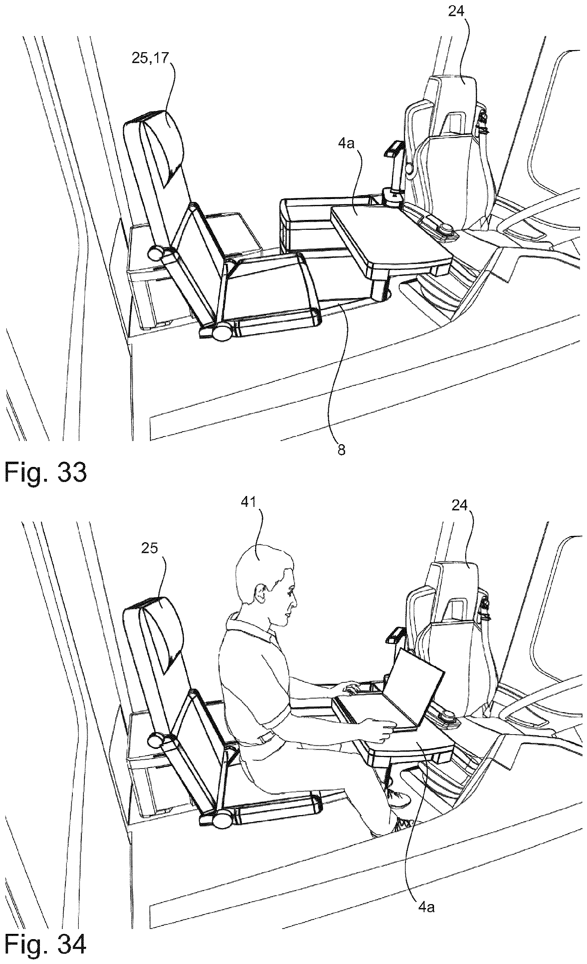

In den Figuren 32-35 ist die Benutzung des Tablets durch den Beifahrer 41 wiedergegeben. Hierfür wird der Beifahrersitz 25 mittels der Schwenkeinrichtung in Richtung des Tisches 4a des Aufbewahrungsbehälters 4 geschwenkt und auf das sich auf dem Tisch 4a befindenden Tablet von dem Beifahrer 41, gegebenenfalls auch während der Fahrt, bedient.

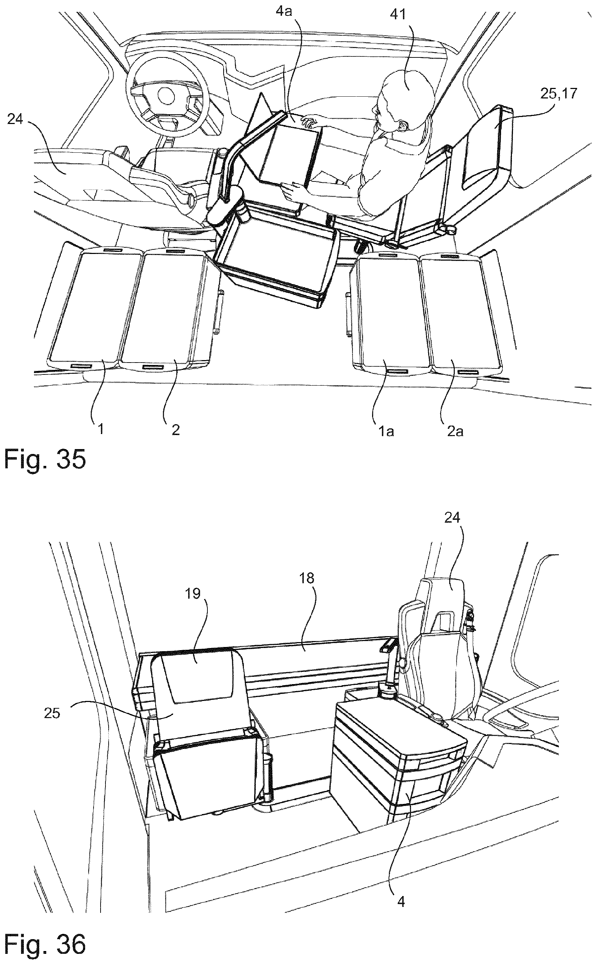

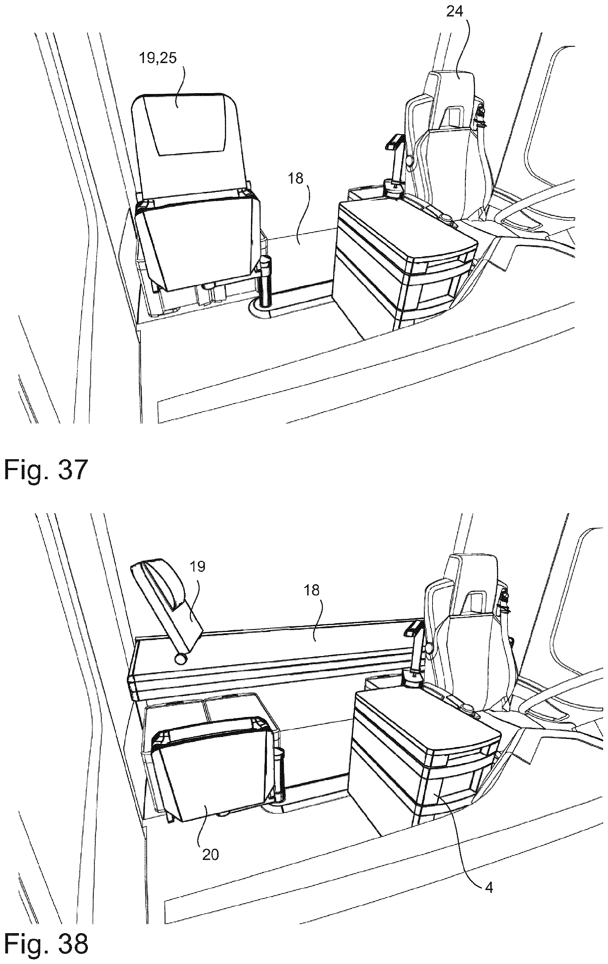

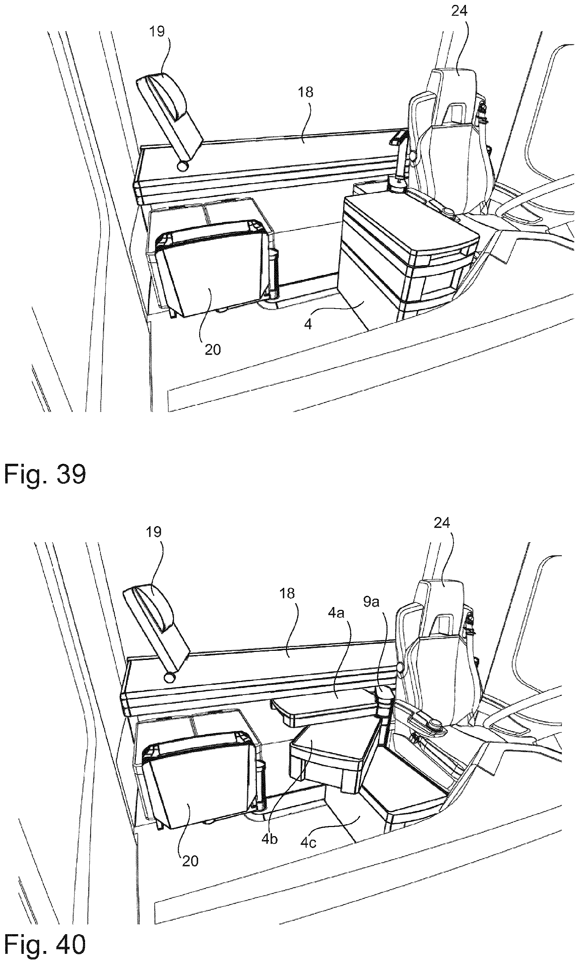

In den Figuren 36-39 ist dargestellt, wie der Beifahrersitz 25 entsprechend verändert werden kann, um dem Fahrer 40 oder dem Beifahrer 41 eine liegende Ruheposition im hinteren Teil der Fahrerkabine 21 zu ermöglichen. Gemäß Fig. 36 und 37 ist der Beifahrersitz 25 im zusammengeklappten Zustand gezeigt. In Fig. 38 ist erkennbar, dass das Oberteil 25a des zusammengeklappten Beifahrersitzes 25 erfindungsgemäß abgenommen werden kann und auf die Liegefläche 18 im hinteren Bereich der Fahrerkabine 21 abgestellt werden kann. Das Oberteil 19 des Beifahrersitzes 25, welches einen Teil der Rückenlehne darstellt, dient somit als Lehne für den Fahrer 40 oder Beifahrer 41, wie es in Fig. 39 im liegenden Zustand wiedergegeben ist. Zugleich wird der untere und somit restliche Teil 20 des Beifahrersitzes 25 im eingeklappten Zustand 11 unterhalb der Liegefläche 18 angeordnet. Dies ist in Fig. 38 dargestellt.

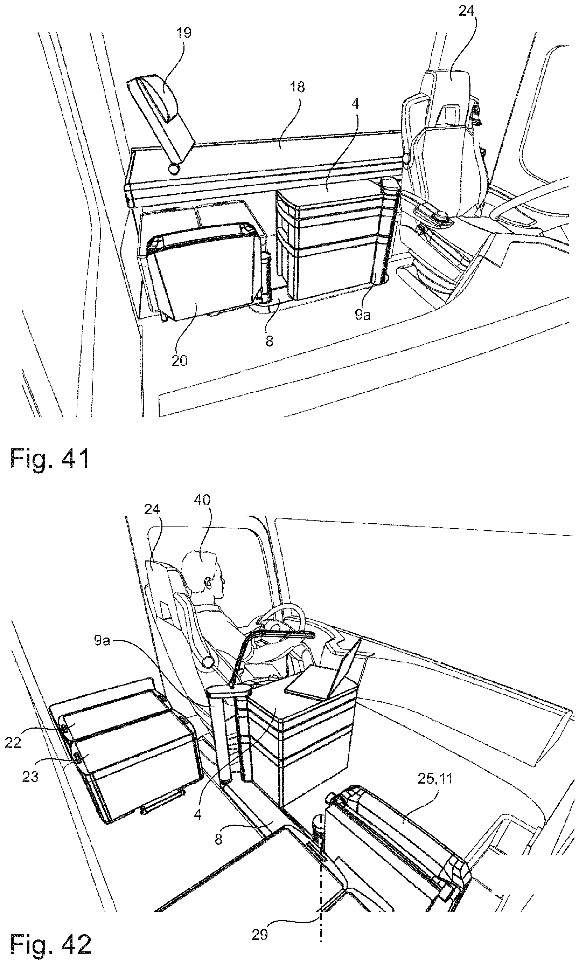

In Fig. 40, 41 und 42 wird nochmals die Abfahrt am nächsten Tag nach erfolgter Ruhepause dargestellt. Hierfür ist erfindungsgemäß der Teleskoparm 9a, der säulenartig ausgebildet ist, mit den einzelnen Teilen 4a, 4b und 4c des Aufbewahrungsbehälters 4 derart schwenkbar angeordnet, dass diese Teile 4a, 4b und 4c in ihrer dargestellten Form treppenartig angeordnet werden können. Hierdurch kann sich der auf der Liegefläche 18 befindende Mensch 40, 41 über die Treppe nach unten bewegen in den Fahrerkabinenraum. Anschließend kann gemäß Fig. 41 diese treppenartige Anordnung vollständig mittels des Schwenkmechanismus und der säulenartigen Anordnung 9a unterhalb der Liegefläche 18 angeordnet sein, um in dem vorderen Bereich ausreichend Platz, zum Beispiel zu Anziehen mit Kleidern zu haben. Im Anschluss daran befindet sich dann der Fahrer 40 wieder auf seinem Fahrersitz 24 und der Aufbewahrungsbehälter 4 wird mittels der Schwenksäule 9 wieder nach vorne verschwenkt, um so neben dem Fahrersitz 24 angeordnet zu sein. Somit kann wieder eine Bedienung des Tablets und von ähnlichen Instrumenten, gegebenenfalls der Kaffeemaschine 15, stattfinden. Zugleich kann die rückseitig angeordnete Liegefläche 18 im eingeklappten Zustand, wie es beispielsweise in den Boxen 22 und 23 dargestellt ist, angeordnet sein, um im rückwärtigen Bereich mehr Raum zur Verfügung zu haben.

Insgesamt ist das System durch seinen Schwenkmechanismus, die dadurch bedingte leichte Beladung mit entsprechenden Beladungshilfen und dem innovativen klappbaren Beifahrersitz sowie den Aufbewahrungsbehältern gekennzeichnet. Die in Leichtbauweise ausgebildeten einzelnen Elemente ermöglichen das Nutzen des Innenraumes einer Fahrerkabine in vielfältiger Weise durch die erfindungsgemäße Schwenkeinrichtung, die verschiedenen Schwenkarme, den klappbaren Beifahrersitz und durch die innovativen einzelnen Bauteile, wie Aufbewahrungsbehälter, kann der Innenraum immer wieder neu und vorteilhaft sowie raumsparend gestaltet werden.

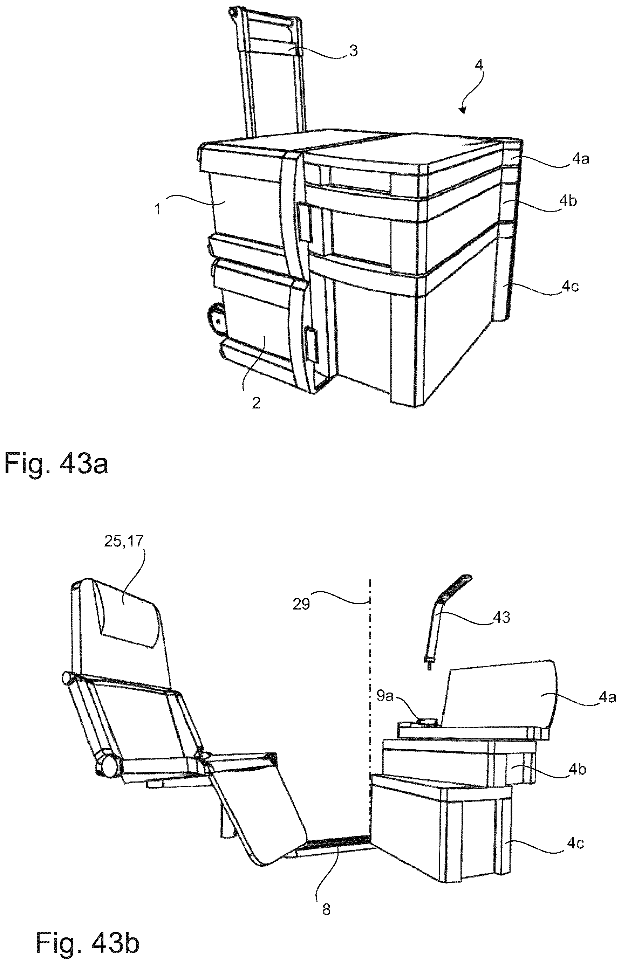

Die einzelnen Bauteile sind nochmals in Fig. 43a und 43b separat dargestellt.

Fig. 44 zeigt eine alternative Ausführungsform der Anordnung von Schwenkarm 8 zu Drehachse 27a. Hierbei ist der Schwenkarm 8 mit seinem ersten Endabschnitt 8a im Bereich einer oberen Hälfte 27a1 der Drehachse 27a befestigt, wobei zwischen einer Längserstreckungsrichtung 8c des Schwenkarms 8 und einer Längserstreckungsrichtung 27az der Drehachse 27a ein Winkel γ ausgebildet ist, welcher mittels einer Antriebseinrichtung 48 zwischen einem Wert von 45° und einem Wert von 135° aktiv einstellbar ist. Die Antriebseinrichtung 48 ist hier nur schematisch eingezeichnet und kann beispielsweise mittels eines Elektromotors ausgebildet sein.

Die Montagebohrung der Drehachse 27a in der Bodenfläche 30 der Fahrerkabine 21 bildet dabei eine Aussparung 44, durch die Leitungen 34, hier Wasserleitungen, geführt sind, wobei davon erste Abschnitte 34a innerhalb der Fahrerkabine 21, zweite Abschnitte 34b durch die Aussparung 44 in der Bodenfläche 30 und dritte 34c und vierte Abschnitte 34d unterhalb der Bodenfläche 30 der Fahrerkabine 21 verlaufend angeordnet sind. Zwischen einem ersten Ende der dritten Abschnitte 34c und einem ersten Ende der vierten Abschnitte 34d ist eine Pumpe 46 für das Wasser angeordnet. An einem zweiten Ende der vierten Abschnitte 34d ist ein Vorratsbehälter 47, hier ein Wasserspeicher angeordnet.

Die ersten Abschnitte 34a der Leitungen 34 sind vorliegend innerhalb des Schwenkarms 8 und parallel zu seiner Längserstreckungsrichtung 8c angeordnet. Bezugszeichen 49 markiert eine Steckverbindung wie zum Beispiel eine Schnellkupplungseinrichtung, mittels der Teil der ersten Abschnitte 34a, der innerhalb des Schwenkarms 8 angeordnet ist, mit dem Teil der ersten Abschnitte 34a, der innerhalb der Drehachse 27a angeordnet ist, verbunden werden kann. Beispielsweise weist das erste Ende 8a des ersten Schwenkarms 8 Aussparungen auf seiner Oberfläche auf, die die Kabelführung ermöglichen.

Die Drehachse 37a ist mittels eines fest mit der Bodenfläche 30 verbundenen und unterhalb dieser angeordneten Tragelements 51 und einem darin gelagerten Wälzlager 50 gegenüber der Bodenfläche 30 gelagert.

Zusätzlich ist hier die Anordnung eines zweiten Schwenkarms 28 vorgesehen, welcher mit einem ersten Endabschnitt 28a an der Drehachse 27a mittels einer nicht näher gezeigten Gleitlagerung angeordnet ist. Mit seiner Längserstreckungsrichtung 28c ist der in seinem Grundzustand 28f vorliegende Schwenkarm 28 parallel zur Bodenfläche 30 angeordnet.

Der ausgezogene Zustand 28g des zweiten Schwenkarms 28 könnte analog zum ausgezogenen Zustand 8g (siehe Fig. 11) des ersten Schwenkarms 8 ausgebildet sein. Ebenfalls kann die Arretierung des zweiten Schwenkarms 28 in mindestens zwei Rastpositionen 28d, 28e analog zur Arretierung des ersten Schwenkarms 8 in mindestens zwei Rastpositionen 8d, 8e erfolgen (siehe Fig. 11 und Fig. 21).

Denkbar ist, dass der zweite Schwenkarm 28 an seiner unteren Fläche 28h mit einer Gleitschicht 52, welche beispielsweise aus Teflon oder POM (Polyoxymethylen) besteht, versehen ist.

An einem zweiten Endabschnitt 28b des zweiten Schwenkarms 28 kann (nicht gezeigt) zum Beispiel ein Beifahrersitz 25 angeordnet werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1, 1a, 2, 2a, 4: Aufbewahrungsbehälter
- 3: Gepäcktransportwagen
- 4a, 4b, 4c: Abschnitte
- 5,6: Klappverbindungen
- 7: Schwenkpunkt
- 8,28: Schwenkarme
- 8a, 8b: Endabschnitte
- 8c: Längserstreckungsrichtung
- 9b, 9c: stangenartige Elemente
- 9a1, 9b1, 9c1, 36a: oberer Endabschnitt
- 9a2, 9b2: unterer Endabschnitt
- 9a: Teleskoparm
- 9': Längserstreckungsrichtung
- 10: Eingreifeinrichtung
- 11: Beifahrersitz, eingeklappt
- 12: Ladungsluke
- 13, 14: Hakenelemente
- 15: Kaffeemaschine
- 16: Cupholder
- 17: Beifahrersitz, ausgeklappt
- 18: Liegefläche
- 19: Oberteil
- 20: restlicher Teil
- 21: Fahrerkabine
- 22, 23: Box
- 24: Fahrersitz
- 25: Beifahrersitz
- 25a: Oberteil
- 25b: Rückenlehne
- 25c: Sitzteil
- 25d: Fußteil
- 26: Schwenkeinrichtung
- 27a, 27b: Drehachse
- 29: Längsachse
- 30: Bodenfläche
- 31: Verbindungselement
- 32a: Grundzustand
- 32b: ausgefahrener Zustand
- 33a: Ausfahrbewegung
- 33b: Einfahrbewegung
- 34: Leitungen
- 35a, 35b, 35c: Achsen
- 36: Funktionsdrehsäule
- 37a: Grundzustand
- 37b: ausgefahrener Zustand
- 38: Teleskopvorrichtung
- 39: Deckenfläche
- 40: Fahrer
- 41: Beifahrer
- 42a, b, c, d: hohlzylindrische Abschnitte
- 43: Schwenkstangenelement
- 44: Aussparung
- 45: Gelenkverbindung
- 46: Pumpe
- 47: Vorratsbehälter
- 48: Antriebseinrichtung
- 49: Steckverbindung
- 50: Lager
- 51: Trägerelement
- 52: Gleitschicht
- 53: Schwenkbewegung

## Patentansprüche

1. Fahrerkabine (21) eines Nutzfahrzeugs,
wobei innerhalb der Fahrerkabine (21) mindestens ein Drehelement (4, 8, 9b, 9c, 28, 36) mit einer an einer Bodenfläche (30) der Fahrerkabine (21) vertikal befestigten Drehachse (27a) zum Durchführen einer Drehbewegung verbunden ist, wobei mindestens eine Drehelement (4, 8, 9b, 9c, 28, 36) mindestens ein Schwenkarm (8, 28) ist, welcher mit einem ersten Endabschnitt (8a, 28a) an der Drehachse (27a) befestigt und um die Drehachse (27a) um 360° verschwenkbar ist, **dadurch gekennzeichnet, dass** der mindestens eine Schwenkarm (8, 28) parallel zur Bodenfläche (30) verlaufend angeordnet sowie direkt kontaktierend zur Bodenfläche (30) ausgebildet ist.

2. Fahrerkabine (21) nach Anspruch 1,
**dadurch gekennzeichnet, dass**
das mindestens eine Drehelement (4, 8, 9b, 9c, 28, 36) ein kastenförmiger Aufbewahrungsbehälter (4) oder eine Drehsäule (9b, 9c, 36) ist und/ oder um die Drehachse (27a) um 360° verschwenkbar ist.

3. Fahrerkabine (21) nach einem der Ansprüche 2-4,
**dadurch gekennzeichnet, dass**
an einem zweiten Endabschnitt (8b, 28b) des mindestens einen Schwenkarms (8, 28) der Aufbewahrungsbehälter (4), ein Beifahrersitz (25) und/ oder mindestens eine Drehsäule (9b, 9c, 36) mechanisch fest verbunden angeordnet ist.

4. Fahrerkabine (21) nach einem der Ansprüche 2-5,
**dadurch gekennzeichnet, dass**
der mindestens eine Schwenkarm (8, 28) entlang seiner Längserstreckungsrichtung (8c, 28c) von einem Grundzustand (8f, 28f) bis zu einem vollständig ausgezogenen Zustand (8g, 28g) teleskopartig ausfahrbar ist.

5. Fahrerkabine (21) nach einem der Ansprüche 2-6,
**dadurch gekennzeichnet, dass**
der mindestens eine Schwenkarm (8, 28) bezüglich seiner Drehbewegung mindestens eine erste (8d, 28d) und eine zweite Rastposition (8e, 28e) aufweist, in welcher er jeweils verdrehsicher zur Bodenfläche (30) fixierbar ist.

6. Fahrerkabine (21) nach Anspruch 7,
**dadurch gekennzeichnet, dass**
der Schwenkarm (8, 28) in der ersten Rastposition (8d, 28d) mit seiner Längserstreckungsrichtung (8c, 28c) parallel zu einer Breitenrichtung (21b) der Fahrerkabine (21) anordenbar ist.

7. Fahrerkabine (21) nach Anspruch 7 oder 8,
**dadurch gekennzeichnet, dass**
der Schwenkarm (8, 28) in der zweiten Rastposition (8e, 28e) unter Ausbildung eines spitzen Winkels (β) zur Breitenrichtung (21b) der Fahrerkabine (21) anordenbar ist, wobei der zweite Endabschnitt (8b, 28b) des Schwenkarms (8, 28) bevorzugt über die Bodenfläche (30) der Fahrerkabine hinausragend angeordnet ist und/oder der Schwenkarm (8, 28) im vollständig ausgezogenen Zustand (8g, 28g) vorliegt.

8. Fahrerkabine (21) nach einem der vorhergehenden Ansprüche,
**dadurch gekennzeichnet, dass**
benachbart und/ oder angrenzend zur Drehachse (27a) in der Bodenfläche (30) der Fahrerkabine (21) mindestens eine Aussparung (44) angeordnet ist.

9. Fahrerkabine (21) nach Anspruch 10,
**dadurch gekennzeichnet, dass**
Leitungen (34) wie Stromleitungen, Wasserleitungen, Hydraulik- und/ oder Pneumatikleitungen vorgesehen sind, wobei davon erste Abschnitte (34a) innerhalb der Fahrerkabine (21), zweite Abschnitte (34b) durch die Aussparung (44) in der Bodenfläche (30) und dritte (34c) und/oder vierte Abschnitte (34d) unterhalb der Bodenfläche (30) der Fahrerkabine (21) verlaufend angeordnet sind.

10. Fahrerkabine (21) nach Anspruch 11,
**dadurch gekennzeichnet, dass**
die ersten Abschnitte (34a) der Leitungen (34) an dem oder innerhalb des mindestens einen Drehelements (4, 8, 27a, 28), insbesondere parallel zur Längserstreckungsrichtung (8c, 28c) des mindestens einen Schwenkarms (8, 28) anordenbar sind.

11. Fahrerkabine (21) nach Anspruch 11 oder 12,
**dadurch gekennzeichnet, dass**
zwischen einem ersten Ende der dritten Abschnitte (34c) und einem ersten Ende der vierten Abschnitte (34d) jeweils mindestens eine Pumpe (46) für Fluide wie Wasser, Luft oder Hydraulikflüssigkeit anordenbar ist.

12. Fahrerkabine (21) nach einem der Ansprüche 11-13,
**dadurch gekennzeichnet, dass**
an einem zweiten Ende der vierten Abschnitte (34d) jeweils mindestens ein Vorratsbehälter (47) wie ein Fluidspeicher für Wasser, Luft oder Hydraulikflüssigkeit anordenbar ist.

13. Fahrerkabine (21) nach einem der vorhergehenden Ansprüche,
**dadurch gekennzeichnet, dass**
die Drehachse (27a) zwischen einem Fahrersitz (24) und dem Beifahrersitz (25) der Fahrerkabine (21) angeordnet ist.

## Claims

1. Driver's cab (21) of a commercial vehicle,
at least one rotary element (4, 8, 9b, 9c, 28, 36) being connected to an axis of rotation (27a) within the driver's cab (21) in order to carry out a rotational movement, which axis is vertically attached to a floor surface (30) of the driver's cab (21), at least one rotary element (4, 8, 9b, 9c, 28, 36) being at least one swivel arm (8, 28), which is attached to the axis of rotation (27a) by a first end portion (8a, 28a) and is pivotable about the axis of rotation (27a) by 360°,
**characterised in that**
the at least one swivel arm (8, 28) is arranged so as to extend in parallel with the floor surface (30) and is designed so as to directly contact the floor surface (30).

2. Driver's cab (21) according to claim 1,
**characterised in that**
the at least one rotary element (4, 8, 9b, 9c, 28, 36) is a box-shaped storage container (4) or a rotating column (9b, 9c, 36) and/or is pivotable about the axis of rotation (27a) by 360°.

3. Driver's cab (21) according to any of claims 2-4,
**characterised in that**
a passenger seat (25) and/or at least one rotating column (9b, 9c, 36) is arranged at a second end portion (8b, 28b) of the at least one swivel arm (8, 28) of the storage container (4) so as to be mechanically rigidly connected thereto.

4. Driver's cab (21) according to any of claims 2-5,
**characterised in that**
the at least one swivel arm (8, 28) can be extended telescopically in the direction of longitudinal extent thereof (8c, 28c) from an initial state (8f, 28f) to a fully extended state (8g, 28g).

5. Driver's cab (21) according to any of claims 2-6,
**characterised in that**
the at least one swivel arm (8, 28) has, with respect to the rotational movement thereof, at least one first latching position (8d, 28d) and one second latching position (8e, 28e), in each of which the swivel arm can be fixed to the floor surface (30) so as to be resistant to rotation.

6. Driver's cab (21) according to claim 7,
**characterised in that**
the swivel arm (8, 28) can be arranged in the first latching position (8d, 28d) such that the direction of longitudinal extent (8c, 28c) thereof is parallel to a width direction (21b) of the driver's cab (21).

7. Driver's cab (21) according to either claim 7 or claim 8,
**characterised in that**
the swivel arm (8, 28) can be arranged in the second latching position (8e, 28e) so as to form an acute angle (β) to the width direction (21b) of the driver's cab (21), the second end portion (8b, 28b) of the swivel arm (8, 28) preferably being arranged so as to project over the floor surface (30) of the driver's cab and/or the swivel arm (8, 28) being in the fully extended state (8g, 28g).

8. Driver's cab (21) according to any of the preceding claims,
**characterised in that**
at least one recess (44) is arranged in the floor surface (30) of the driver's cab (21) so as to be adjacent to and/or adjoin the axis of rotation (27a).

9. Driver's cab (21) according to claim 10,
**characterised in that**
lines (34) such as power lines, water lines, hydraulic and/or pneumatic lines are provided, first portions (34a) of which are arranged so as to extend within the driver's cab (21), second portions (34b) of which are arranged so as to extend through the recess (44) in the floor surface (30), and third portions (34c) and/or fourth portions (34d) of which are arranged so as to extend underneath the floor surface (30) of the driver's cab (21).

10. Driver's cab (21) according to claim 11,
**characterised in that**
the first portions (34a) of the lines (34) can be arranged on or within the at least one rotary element (4, 8, 27a, 28), in particular in parallel with the direction of longitudinal extent (8c, 28c) of the at least one swivel arm (8, 28).

11. Driver's cab (21) according to either claim 11 or claim 12,
**characterised in that**
at least one pump (46) for fluids such as water, air or hydraulic fluid can be arranged between a first end of each of the third portions (34c) and a first end of each of the fourth portions (34d).

12. Driver's cab (21) according to any of claims 11-13,
**characterised in that**
at least one storage tank (47) such as a fluid reservoir for water, air or hydraulic fluid can be arranged at a second end of each of the fourth portions (34d).

13. Driver's cab (21) according to any of the preceding claims,
**characterised in that**
the axis of rotation (27a) is arranged between a driver's seat (24) and the passenger seat (25) of the driver's cab (21).

## Revendications

1. Cabine de conduite (21) d'un véhicule utilitaire,
où, à l'intérieur de la cabine de conduite (21), au moins un élément tournant (4, 8, 9b, 9c, 28, 36) est relié à un axe de rotation (27a) fixé verticalement sur une surface au sol (30) de la cabine de conduite (21) pour la réalisation d'un mouvement de rotation, où au moins un élément tournant (4, 8, 9b, 9c, 28, 36) est au moins un bras pivotant (8, 28), lequel est fixé par une première partie d'extrémité (8a, 28a) sur l'axe de rotation (27a) et est apte à pivoter de 360° autour de l'axe de rotation (27a),
**caractérisée par le fait que**
le au moins un bras pivotant (8, 28) est disposé en s'étendant parallèlement à la surface au sol (30) de même que réalisé directement en contact avec la surface au sol (30).

2. Cabine de conduite (21) selon la revendication 1,
**caractérisée par le fait que**
le au moins un élément tournant (4, 8, 9b, 9c, 28, 36) est un conteneur de rangement (4) en forme de boîte ou une colonne rotative (9b, 9c, 36) et/ou est apte à pivoter de 360° autour de l'axe de rotation (27a).

3. Cabine de conduite (21) selon l'une des revendications 2-4,
**caractérisée par le fait que**
sur une seconde partie d'extrémité (8b, 28b) du au moins un bras pivotant (8, 28) le conteneur de rangement (4), un siège de passager (25) et/ou au moins une colonne rotative (9b, 9c, 36) sont disposés liés de manière fixe mécaniquement.

4. Cabine de conduite (21) selon l'une des revendications 2-5,
**caractérisée par le fait que**
le au moins un bras pivotant (8, 28) est apte à être déployé de façon télescopique le long de sa direction d'étendue longitudinale (8c, 28c) d'un état de base (8f, 28f) jusqu'à un état complètement sorti (8g, 28g).

5. Cabine de conduite (21) selon l'une des revendications 2-6,
**caractérisée par le fait que**
le au moins un bras pivotant (8, 28) présente en ce qui concerne son mouvement de rotation au moins une première (8d, 28d) et une seconde position d'encliquetage (8e, 28e), dans lesquelles il est à chaque fois apte à être fixé bloqué en rotation par rapport à la surface au sol (30).

6. Cabine de conduite (21) selon la revendication 7,
**caractérisée par le fait que**
le bras pivotant (8, 28) est apte à être disposé dans la première position d'encliquetage (8d, 28d) avec sa direction d'étendue longitudinale (8c, 28c) parallèlement à une direction de largeur (21b) de la cabine de conduite (21).

7. Cabine de conduite (21) selon l'une des revendications 7 ou 8,
**caractérisée par le fait que**
le bras pivotant (8, 28) est apte à être disposé dans la seconde position d'encliquetage (8e, 28e) en formant un angle aigu (β) par rapport à la direction de largeur (21b) de la cabine de conduite (21), la seconde partie d'extrémité (8b, 28b) du bras pivotant (8, 28) étant disposée de préférence de manière à faire saillie sur la surface au sol (30) de la cabine de conduite et/ou le bras pivotant (8, 28) se présentant à l'état complètement sorti (8g, 28g).

8. Cabine de conduite (21) selon l'une des revendications précédentes,
**caractérisée par le fait que**
au moins un évidement (44) est disposé adjacent et/ou au voisinage de l'axe de rotation (27a) dans la surface au sol (30) de la cabine de conduite (21).

9. Cabine de conduite (21) selon la revendication 10,
**caractérisée par le fait que**
des conduits (34) tels que des lignes électriques, des conduites d'eau, des conduites hydrauliques et/ou pneumatiques, sont prévus, des premières parties (34a) de ceux-ci étant disposées s'étendant à l'intérieur de la cabine de conduite (21), des deuxièmes parties (34b) de ceux-ci, à travers l'évidement (44) dans la surface au sol (30), et des troisièmes (34c) et/ou quatrièmes (34d) parties de ceux-ci, au-dessous de la surface au sol (30) de la cabine de conduite (21).

10. Cabine de conduite (21) selon la revendication 11,
**caractérisée par le fait que**
les premières parties (34a) des conduits (34) sont aptes à être disposées sur ou à l'intérieur du au moins un élément tournant (4, 8, 27a, 28), en particulier parallèlement à la direction d'étendue longitudinale (8c, 28c) du au moins un bras pivotant (8, 28).

11. Cabine de conduite (21) selon l'une des revendications 11 ou 12,
**caractérisée par le fait que**
à chaque fois au moins une pompe (46) pour des fluides comme l'eau, l'air ou un fluide hydraulique est apte à être disposée entre une première extrémité des troisièmes parties (34c) et une première extrémité des quatrièmes parties (34d).

12. Cabine de conduite (21) selon l'une des revendications 11-13,
**caractérisée par le fait que**
à chaque fois au moins un récipient de stockage (47) tel qu'un réservoir de fluide pour eau, air ou fluide hydraulique est apte à être disposé sur une seconde extrémité des quatrièmes parties (34d).

13. Cabine de conduite (21) selon l'une des revendications précédentes,
**caractérisée par le fait que**
l'axe de rotation (27a) est disposé entre un siège de conduite (24) et le siège de passager (25) de la cabine de conduite (21).
